(19) Europäisches Patentamt
European Patent Office
Office européen des brevets

(11) **EP 2 440 370 B1**

(12) **EUROPÄISCHE PATENTSCHRIFT**

(45) Veröffentlichungstag und Bekanntmachung des Hinweises auf die Patenterteilung:
**03.04.2013 Patentblatt 2013/14**

(21) Anmeldenummer: **10722609.4**

(22) Anmeldetag: **18.05.2010**

(51) Int Cl.:
*B24B 37/04* (2012.01)     *B24B 49/10* (2006.01)
*G01B 7/15* (2006.01)

(86) Internationale Anmeldenummer:
**PCT/EP2010/003028**

(87) Internationale Veröffentlichungsnummer:
**WO 2010/139397 (09.12.2010 Gazette 2010/49)**

(54) **VERFAHREN ZUM BEARBEITEN VON FLACHEN WERKSTÜCKEN**

METHOD FOR MACHINING FLAT WORKPIECES

PROCÉDÉ D'USINAGE DE PIÈCES PLATES

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**

(30) Priorität: **06.06.2009 DE 102009024125**

(43) Veröffentlichungstag der Anmeldung:
**18.04.2012 Patentblatt 2012/16**

(73) Patentinhaber: **Peter Wolters GmbH
24768 Rendsburg (DE)**

(72) Erfinder:
• **KANZOW, Jörn
24103 Kiel (DE)**
• **JESSEN, Sebastian
24229 Dänischenhagen (DE)**
• **GURGEL, Eckehard
24782 Büdelsdorf (DE)**
• **GROTKOPP, Ingo
24105 Kiel (DE)**

(74) Vertreter: **Hauck Patent- und Rechtsanwälte
Neuer Wall 50
20354 Hamburg (DE)**

(56) Entgegenhaltungen:
EP-A1- 1 970 159     DE-A1-102004 040 429
DE-A1-102007 056 627     US-A1- 2006 194 511

**Beschreibung**

Die Erfindung betrifft ein Verfahren zum Bearbeiten von flachen Werkstücken in einer Doppelseitenbearbeitungsmaschine, die eine obere und eine untere Arbeitsscheibe aufweist, wobei mindestens eine der Arbeitsscheiben rotierend angetrieben ist und die Arbeitsscheiben jeweils eine ringförmige Arbeitsfläche besitzen, wobei die Arbeitsflächen zwischen sich einen ebenfalls ringförmigen Arbeitsspalt begrenzen, in dem sich mindestens ein Träger befindet, der mindestens ein Werkstück in dem Arbeitsspalt führt, so dass das mindestens eine Werkstück zwischen den Arbeitsflächen doppelseitig bearbeitet wird. Mit derartigen Bearbeitungsmaschinen werden beispielsweise Halbleiterscheiben (Wafer) doppelseitig bearbeitet, z.B. geschliffen oder poliert. Es ist dabei von entscheidender Bedeutung, den Materialabtrag präzise zum gewünschten Zeitpunkt bzw. bei Erreichen einer vorgegebenen Werkstückdicke zu beenden. Einerseits soll eine große Anzahl von Werkstücken mit einer möglichst geringen Dickenstreuung hergestellt werden. Andererseits hängt die Qualität der bearbeiteten Werkstücke und die Wirtschaftlichkeit des Prozesses insbesondere bei der Doppelseitenpolitur empfindlich davon ab, welche Dicke das bearbeitete Werkstück im Verhältnis zu dem das Werkstück aufnehmenden Träger hat. Es kann dabei bevorzugt sein, den Bearbeitungsvorgang zu beenden, wenn das Werkstück um wenige Mikrometer dicker als der Träger, beispielsweise eine Läuferscheibe, ist. Auf diese Weise werden eine Abrasion und damit ein vorzeitiger Verschleiß des Trägers vermieden. Es kann anderseits bevorzugt sein, die Werkstücke möglichst präzise auf die gleiche Dicke zu bearbeiten wie die Trägerdicke. Dies führt zu einer vorteilhaften Dickenverteilung über die Oberfläche des Werkstücks. Es kann schließlich gewünscht sein, den Bearbeitungsvorgang, beispielsweise einen Poliervorgang, noch weiter fortzusetzen und geringfügig in die Oberfläche des Trägers zu arbeiten, beispielsweise zu polieren. Auf diese Weise wird eine optimale lokale Ebenheit, insbesondere im Randbereich des Wafers, erreicht. Nachteilig bei den beiden letztgenannten Vorgehensweisen ist allerdings ein erhöhter Verschleiß der Träger, beispielsweise Läuferscheiben, da diese mit den Arbeitsbelägen der Arbeitsflächen in Berührung kommt. Zwischen den drei genannten möglichen Vorgehensweisen liegt oftmals nur ein Dickenunterschied der Werkstücke von 5-10 $\mu$m. Vor diesem Hintergrund ist es zwingend erforderlich, die Bearbeitung der Werkstücke präzise zum richtigen Zeitpunkt zu beenden, um reproduzierbar Werkstücke mit der gewünschten Qualität herzustellen.

Zur Werkstückdickenmessung sind aus dem Stand der Technik bereits Lösungen bekannt. So beschreibt US 4 433 510 A eine Messung des Abstands der Arbeitsscheiben zueinander mit einem Wirbelstromsensor. Um Messfehler bedingt durch Unebenheit oder nicht vollständig parallele Ausrichtung der Arbeitsscheiben zu vermeiden, erfolgt die Abstandsmessung dabei nur zu bestimmten Zeitpunkten, an denen sich die Arbeitsscheiben in der gleichen Winkelposition zueinander befinden. Aus US 5 969 521 A ist eine Vorrichtung bekannt, die mindestens zwei Wirbelstromsensoren aufweist, wobei durch die Anordnung der Sensoren zueinander sichergestellt werden soll, dass einer der Sensoren gerade "freie Sicht" auf die gegenüberliegende Arbeitsscheibe hat, wenn der andere Sensor die Anwesenheit einer Läuferscheibe detektiert. Auf diese Weise sollen Messfehler vermieden werden, die durch die Läuferscheiben bedingt werden. US 7 147 541 A beschreibt eine Vorrichtung zur Dickenmessung von Werkstücken bei der Doppelseitenbearbeitung mit einem Wirbelstromsensor, der den Abstand einer Arbeitsscheibe zu der Oberfläche einer Läuferscheibe misst. Ein Arbeitsbelagverschleiß soll dabei rechnerisch kompensiert werden. Darüber hinaus ist aus DE 10 2004 040 429 A1 eine Doppelseitenpoliermaschine bekannt geworden, die an mindestens zwei radial beabstandeten Punkten des Polierspalts den Abstand der Polierscheiben misst. Basierend auf dieser Messung wird eine unerwünschte Verformung des Arbeitsspalts detektiert und dieser gegebenenfalls entgegengewirkt. Auch aus DE 10 2006 037 490 A1 ist eine Vorrichtung zur Beeinflussung der Arbeitsspaltgeometrie bekannt, mit der mindestens eine der Arbeitsscheiben konkav oder konvex verformt werden kann. Aus DE 10 2007 056 627 A1 ist es bekannt, an unterschiedlichen Orten des Arbeitsspalts die Dicke zu messen und auf Grundlage dieser Messwerte eine oder beide Arbeitsscheiben zu verstellen, um die Geometrie des Arbeitsspalts in gewünschter Weise einzustellen. Die Dicke von in dem Arbeitsspalt bearbeiteten Werkstücken wird dabei mittels eines separaten kapazitiven Dickenmessverfahrens ermittelt.

Die bekannten Verfahren zur Bestimmung der Werkstückdicke stellen oftmals nicht die erforderliche Genauigkeit bereit. Insbesondere kommt es durch im Betrieb unvermeidliche oder gezielt herbeigeführte Abweichungen der Spaltgeometrie von der Planparallelität zu Messfehlern und dadurch ungenauen Dickenbestimmungen.

Ausgehend von dem erläuterten Stand der Technik liegt der Erfindung die Aufgabe zugrunde, ein Verfahren der eingangs genannten Art bereit zu stellen, mit dem Werkstücke präziser bis zu einer vorgegebenen Dicke bearbeitet werden können.

Die Erfindung löst diese Aufgabe durch den Gegenstand von Anspruch 1. Vorteilhafte Ausgestaltungen finden sich in den abhängigen Ansprüchen, der Beschreibung und den Figuren.

Für ein Verfahren der eingangs genannten Art löst die Erfindung die Aufgabe dadurch, dass an mindestens zwei radial beabstandeten Messorten des Arbeitsspalts der Abstand zwischen den Arbeitsscheiben gemessen wird, und dass aus den gemessenen Abständen ein Abstand zwischen den Arbeitsscheiben an einem die Dicke des in dem Arbeitsspalt bearbeiteten mindestens einen Werkstücks repräsentierenden Ort des Arbeitsspalts, beispielsweise einem von den Messorten wiederum radial beabstandeten Ort des Arbeitsspalts, ermittelt wird und aus dem so ermittelten Abstand auf die Dicke des in dem Arbeitsspalt bearbeiteten mindestens einen Werkstücks geschlossen wird. Die Arbeitsflächen der Arbeitsscheiben werden durch ihre dem Arbeitsspalt zugewandten Oberflächen gebildet. Der Abstand zwischen den Arbeitsscheiben ist also insbesondere der Abstand zwischen ihren Arbeitsflächen. Bei der erfindungsgemäßen Doppelseitenbearbeitung kann es sich z.B. um ein Schleifen, Läppen, Honen oder Polieren handeln. Bei den Werkstücke kann es sich z.B. um Halbleiterscheiben (Wafer) handeln. Es kann insbesondere eine Mehrzahl von Werkstücken gleichzeitig in dem Arbeitsspalt bearbeitet werden. Die Werkstückdicke, auf die erfindungsgemäß geschlossen wird, ist die momentane Werkstückdicke bei der Bearbeitung. Insbesondere kann aus dem aus den gemessenen Abständen ermittelten Abstand der Arbeitsscheiben die Werkstückdicke konkret bestimmt, insbesondere berechnet, werden. So kann der ermittelte Abstand beispielsweise direkt als Werkstücksdicke angenommen werden, gegebenenfalls unter Subtraktion einer Arbeitsbelagdicke. Es ist aber auch möglich, nur einen Abschaltzeitpunkt für die Bearbeitung zu bestimmen, ohne die Werkstückdicke dabei konkret zu ermitteln. Es wird also nur bei einem bestimmten erfindungsgemäß aus den gemessenen Abständen ermittelten Abstand darauf geschlossen, dass nun die gewünschte Werkstückdicke vorliegt und die Bearbeitung beendet. Anhand des erfindungsgemäßen Rückschlusses auf die Werkstückdicke wird also der Abschaltzeitpunkt für die Bearbeitung ermittelt, so dass die Werkstücke nach der Bearbeitung präzise die vorgegebene Dicke besitzen.

Erfindungsgemäß werden erstmals Messsignale mindestens zweier Abstandssensoren kombiniert, um den Abstand an einem bestimmten, insbesondere weiteren Ort des Arbeitsspalts zu bestimmen und daraus eine Werkstücksdicke oder einen Abschaltzeitpunkt für die Bearbeitung zu bestimmen. Insbesondere kann der Abstand zwischen den Arbeitsscheiben an einer beliebigen radialen Position aus den Messsignalen zweier radial beabstandet angeordneter Messsensoren berechnet und für die Bestimmung des Abschaltpunktes der Bearbeitung oder für eine Berechnung der tatsächlichen Werkstückdicke herangezogen werden. Dies sei im Folgenden näher erläutert, wobei im weiteren die folgenden Definitionen verwendet werden:

$R_i$: Radius des inneren Arbeitsscheiben- bzw. Arbeitsflächenrands
$R_a$: Radius des äußeren Arbeitsscheiben- bzw. Arbeitsflächenrands
$R_m$: Mittelwert aus $R_i$ und $R_a$ (mittlerer Radius der Arbeitsscheibe)
$R_1$: Radiale Position eines ersten (inneren) Sensors
$R_2$: Radiale Position eines zweiten (äußeren) Sensors
$R_s$: Radius, bei dem eine Änderung der Spaltgeometrie keine Abstandsänderung bewirkt
$D_i$: Abstand zwischen den Arbeitsflächen der Arbeitsscheiben bei $R_i$
$D_a$: Abstand zwischen den Arbeitsflächen der Arbeitsscheiben bei $R_a$
$D_m$: Abstand zwischen den Arbeitsflächen der Arbeitsscheiben bei $R_m$
$D_1$: Abstand zwischen den Arbeitsflächen der Arbeitsscheiben am Ort eines ersten Abstandssensors
$D_2$: Abstand zwischen den Arbeitsflächen der Arbeitsscheiben am Ort eines zweiten Abstandssensors
$\Delta D_1$: Veränderung des Abstands zwischen den Arbeitsflächen der Arbeitsscheiben am Ort des ersten Sensors
$\Delta D_2$: Veränderung des Abstands zwischen den Arbeitsflächen der Arbeitsscheiben am Ort des zweiten Sensors
$D(R)$: Scheibenabstand an einer beliebigen radialen Position R.

Die Radien (Halbmesser) beziehen sich jeweils auf das Zentrum des ringförmigen Arbeitsspalts, das üblicherweise auf der Drehachse der mindestens einen rotierend angetriebenen Arbeitsscheibe liegt. Die Radien geben als Vektoren jeweils eine radiale Position an. Die Abstandsmessung und damit der Abstand zwischen den Arbeitsflächen der Arbeitsscheiben berücksichtigt dabei (indirekt) auch einen etwaig vorgesehenen Arbeitsbelag, da dieser den gemessenen Abstand zwischen den Arbeitsflächen der Arbeitsscheiben beeinflusst. Unter der Annahme, dass die Arbeitsscheibenoberflächen in radialer Richtung einer Geraden entsprechen, kann aus den Messsignalen zweier radial beabstandeter Abstandssensoren mit der folgenden Gleichung der Abstand der beiden Arbeitsscheiben zueinander an einer beliebigen radialen Position berechnet werden:

$$D(R) = D_1 + (R - R_1) * \frac{D_2 - D_1}{R_2 - R_1} \qquad \text{Gl. 1}$$

Durch die erfindungsgemäße Kombination zweier radial verteilter Sensorsignale ist es möglich, beim Rückschluss auf die Werkstückdicke Fehler zu erkennen und zu kompensieren, die durch einen nicht parallelen Arbeitsspalt verursacht werden. Der Erfindung liegt die Erkenntnis zugrunde, dass sich mit einem einzelnen Abstandssensor eine Werkstückdicke nicht zuverlässig bestimmen lässt, da der Arbeitsspalt im Betrieb praktisch immer von der Parallelität abweicht, sei dies erwünscht oder nicht. In radialer Richtung ergeben sich also immer unterschiedliche Abstandsmesswerte. Durch die erfindungsgemäße Verknüpfung der von radial zueinander beabstandeten Abstandssensoren gemessenen Werte kann dagegen auch bei einem nicht parallelen Arbeitsspalt in präziser Weise auf die tatsächliche Werkstückdicke rückgeschlossen werden. Insbesondere kann aus den gemessenen Abstandswerten auf einen für die Werkstückdicke auch bei veränderter Spaltgeometrie charakteristischen Arbeitsscheibenabstand bzw. eine charakteristische Spaltbreite und damit auf die tatsächliche Werkstückdicke rückgeschlossen werden. Dadurch wird die Qualität bei der Werkstückbearbeitung erfindungsgemäß erhöht.

Gemäß einer Ausgestaltung kann aus den gemessenen Abständen der Abstand zwischen den Arbeitsscheiben an einem Ort am inneren oder äußeren Rand des Arbeitsspalts ermittelt werden und aus dem so ermittelten Abstandswert auf die Dicke des in dem Arbeitsspalt bearbeiteten mindestens einen Werkstücks geschlossen werden. Dieser Ausgestaltung liegt die Annahme zugrunde, dass die geringste Spaltbreite entweder am Innen- oder am Außenrand der Arbeitsscheiben auftritt und diese die tatsächliche momentane Werkstückdicke repräsentiert, da das Werkstück diesen engsten Bereich des Arbeitsspalts während seiner Bearbeitung regelmäßig passieren muss und folglich nicht dicker sein kann. Es ist dabei auch möglich, sowohl den Abstand am inneren Rand der Arbeitsscheibe als auch am äußeren Rand der Arbeitsscheibe zu ermitteln und für den die Werkstückdicke repräsentierenden Abstandswert den kleineren der so ermittelten Werte anzunehmen. Der Abstand der Arbeitsscheiben am inneren bzw. äußeren Rand des Arbeitsspalts berechnet sich nach den folgenden Gleichungen:

$$D_i = D(R_i) = D_1 + (R_i - R_1) * \frac{D_2 - D_1}{R_2 - R_1} \qquad \text{Gl. 2}$$

$$D_a = D(R_a) = D_1 + (R_a - R_1) * \frac{D_2 - D_1}{R_2 - R_1} \qquad \text{Gl.3}$$

Nach einer anderen Ausgestaltung kann aus den gemessenen Abständen der Abstand zwischen den Arbeitsscheiben an einem Ort ermittelt werden, dessen Radius dem Mittelwert aus dem Radius des inneren Rands des Arbeitsspalts und des äußeren Rands des Arbeitsspalts entspricht, und aus dem so ermittelten Abstand auf die Dicke des in dem Arbeitsspalt bearbeiteten mindestens einen Werkstücks geschlossen werden Bei dieser Ausgestaltung wird ein die Werkstückdicke repräsentierender Abstandswert beispielsweise durch die folgende Gleichung berechnet:

$$D_m = D(R_m) = D_1 + (\frac{R_i + R_a}{2} - R_1) * \frac{D_2 - D_1}{R_2 - R_1} \qquad \text{Gl. 4}$$

Diese Ausgestaltung geht von der Erkenntnis aus, dass die Werkstückdicke weder der Spaltbreite am inneren noch am äußeren Rand des Arbeitsspalts entspricht, sondern aufgrund einer gewissen Nachgiebigkeit des Arbeitsbelags, beispielsweise eines Poliertuchs, und damit eines Zusammendrücken des Arbeitsbelags durch das Werkstück sowie einer Bewegung des Werkstücks über die gesamte Breite der Arbeitsscheiben gerade dem Scheibenabstand am Ort des mittleren Arbeitsscheibenradius entspricht.

Nach einer weiteren Ausgestaltung kann vorgesehen sein, dass die Arbeitsfläche zumindest einer der Arbeitsscheiben in eine konvexe oder eine konkave Form verstellt werden kann und aus den gemessenen Abständen der Abstand zwischen den Arbeitsscheiben an einem Ort ermittelt wird, an dem sich der Abstand zwischen den Arbeitsscheiben bei einer Verstellung der mindestens einen Arbeitsscheibe in eine konvexe oder eine konkave Form nicht ändert, und aus dem so ermittelten Abstand auf die Dicke des in dem Arbeitsspalt bearbeiteten mindestens einen Werkstücks geschlossen wird. Mindestens eine der Arbeitsscheiben kann bei dieser Ausgestaltung also verstellt werden, so dass ihre Arbeitsfläche eine leicht konkave oder konvexe Form annimmt und die Spaltgeometrie entsprechend von der Planparallelität abweicht. Dazu kann eine geeignete Verstelleinrichtung vorgesehen sein, wie sie beispielsweise aus DE 10 2006 037 490 A1 bekannt ist. Dieser Ausgestaltung liegt die Erkenntnis zugrunde, dass sich bei jeder Bearbeitung aufgrund der eingebrachten Prozesswärme eine mehr oder weniger starke Verformung der Arbeitsscheiben und damit Veränderung der Spaltgeometrie einstellt. Dadurch wiederum kommt es zu Veränderungen der gemessenen Abstandswerte im Zuge der Bearbeitung, die nicht allein auf die Abnahme der Werkstückdicke durch den abrasiven Bearbeitungsprozess zurückzuführen sind. Daher wird bei dieser Ausgestaltung gerade der Abstand an dem radialen Ort ermittelt, bei dem eine solche Veränderung der Spaltgeometrie keine Abstandsänderung bewirkt. Es handelt sich bei diesem Ort also um den Dreh- bzw. Schwenkpunkt einer erwünschten oder unerwünschten Verformung der Arbeitsflächen. Diese Ausgestaltung erlaubt eine noch präzisere Bestimmung der Werkstückdicke, wobei der Radius, bei dem der zu ermittelnde Abstandswert vorliegt, von der einzelnen Bearbeitungsmaschine sowie den jeweiligen Bearbeitungsparametern abhängt. Der Radius, für den die Abstandsänderung bei einer Veränderung der Spaltgeometrie Null ist, liegt dabei nicht notwendigerweise in der Mitte des ringförmigen Arbeitsspalts. Er kann vorab im Rahmen einer Kalibrierung der Bearbeitungsmaschine mit einer entsprechenden Verstellvorrichtung für den Arbeitsspalt ermittelt werden. So wurde beobachtet, dass eine Veränderung der Spaltgeometrie zu einer charakteristischen Veränderung der Messwerte zweier radial beabstandeter Abstandssensoren führt. Entsprechend kann nach einer weiteren Ausgestaltung vorgesehen sein, dass der Ort, an dem sich der Abstand zwischen den Arbeitsscheiben bei einer Verstellung der mindestens einen Arbeitsscheibe in eine konvexe oder eine konkave Form nicht ändert, ermittelt wird, indem die mindestens eine Arbeitsscheibe in eine konkave und/oder eine konvexe Form verstellt wird, dabei eine Änderung des Abstands der Arbeitsscheiben an den Messorten gemessen wird und daraus der Radius des Orts bestimmt wird, an dem sich der Abstand zwischen den Arbeitsscheiben bei einer Verstellung der mindestens einen Arbeitsscheibe nicht ändert. Sind die bei einer definierten Verstellung des Arbeitsspalts an den beiden radial beabstandeten Messorten auftretenden Abstandsänderungen durch Messung ermittelt worden, kann der Radius, für den die Abstandsänderung bei einer Veränderung der Spaltgeometrie gerade Null ist mit der folgenden Gleichung berechnet werden:

$$R_s = \frac{\Delta D_2 * R_1 + \Delta D_1 * R_2}{\Delta D_1 + \Delta D_2} \qquad \text{Gl. 5}$$

Der die Werkstückdicke repräsentierende Abstandswert kann dann berechnet werden aus dem Abstand der Arbeitsscheiben bei dem Radius $R_s$:

$$D_s = D(R_s) = D_1 + (D_2 - D_1) * \frac{\Delta D_1}{\Delta D_1 + \Delta D_2} \qquad \text{Gl. 6}$$

Nach einer weiteren Ausgestaltung kann aus den gemessenen Abständen ein Abstand zwischen den Arbeitsscheiben an einer Mehrzahl von zu den Messorten radial beabstandeten Orten ermittelt werden, die so ermittelten Abstände mit einer die radiale Aufenthaltswahrscheinlichkeit der Werkstücke an den den ermittelten Abständen zugeordneten Orten im Zuge ihrer Bearbeitung in dem Arbeitsspalt repräsentierenden Größe gewichtet werden und auf die Werkstückdicke aus dem Mittelwert der gewichteten Abstände geschlossen werden. Die bestimmten Abstandsorte können in radialer Richtung gleichmäßig über den Arbeitsspalt verteilt sein. Bei dieser Ausgestaltung wird also aus den gemessenen Abstandswerten zunächst für mehrere verschiedene Radien der jeweils resultierende Arbeitsscheibenabstand berechnet. Es wird dann die mittlere radiale Aufenthaltswahrscheinlichkeit der Werkstücke in dem Arbeitsspalt berücksichtigt. Die Werkstücke bewegen sich im Zuge ihrer Bearbeitung durch den Arbeitsspalt hindurch. Abhängig von der konkreten Ausgestaltung und Geometrie der Maschine, wie z.B. Werkstückgröße, Arbeitsspaltgröße etc. sowie den Bearbeitungsparametern, wie z.B. Rotationsgeschwindigkeit der Arbeitsscheibe(n) und Träger halten sich die Werkstücke an unterschiedlichen Orten des Arbeitsspalts unterschiedlich häufig auf. Eine detaillierte Beschreibung der radialen Aufenthaltswahrscheinlichkeit sowie deren Berechnung findet sich in T. Ardelt "Einfluss der Relativbewegung auf den Prozess und das Arbeitsergebnis beim Planschleifen mit Planetenkinetik", ISBN 3-8167-5609-3 (T. Ardelt). Bei dieser Ausgestaltung werden die an unterschiedlichen Radien bestimmten Abstandswerte also mit der mittleren radialen Aufenthaltswahrscheinlichkeit an den entsprechenden Radien bzw. gemäß T. Ardelt mit der dort definierten bezogenen Bahnlängenverteilung gewichtet. Die tatsächliche Werkstückdicke kann dann als arithmetisches Mittel sämtlicher gewichteter radialer Scheibenabstände bestimmt werden. Dieser Ausgestaltung der Erfindung liegt die Annahme zugrunde, dass die Werkstückdicke den Arbeitsscheibenabständen eher an solchen Orten entsprechen, an denen sich die Werkstücke während ihrer Bearbeitung am häufigsten aufhalten.

Gemäß einer weiteren Ausgestaltung kann das erfindungsgemäße Verfahren wiederholt durchgeführt werden, ein zeitlicher Verlauf der Werkstückdicke aufgenommen werden und aus dem zeitlichen Verlauf ein Endzeitpunkt für die Werkstückbearbeitung ermittelt werden. Es kann dann beispielsweise aus dem zeitlichen Verlauf der als Werkstückdicke bestimmten Abstandswerte der Abschaltzeitpunkt der Bearbeitung präzise festgelegt werden. Aufgrund der erfindungsgemäß erhöhten Präzision und geringeren Fehleranfälligkeit ist es möglich, aus dem zeitlichen Kurvenverlauf der Werkstückdicke Rückschlüsse auf die Vorgänge in dem Arbeitsspalt während der Bearbeitung zu ziehen. Dabei können im Wesentlichen zwei stabile Betriebszustände beobachtet werden. Der erste Betriebszustand ist von einem weitgehend gleichmäßigen Materialabtrag und einer entsprechenden konstanten Dickenabnahme der Werkstücke gekennzeichnet. Dieser Betriebszustand zeigt sich in dem Kurvenverlauf als Gerade mit einer durch die Abtragsrate bestimmten (negativen) Steigung. Der zweite Betriebszustand wird erreicht, wenn im Wesentlichen kein weiterer Materialabtrag der Werkstücke mehr erfolgt, da diese beispielsweise die Dicke der sie aufnehmenden Träger oder Läuferscheiben erreicht haben. Dieser Bereich zeigt sich in dem zeitlichen Verlauf entsprechend als eine Gerade mit der Steigung Null. Von besonderem Interesse ist der Übergang zwischen diesen beiden Betriebszuständen. Je nach der gewählten Bearbeitungsstrategie kann in diesem Übergangsbereich die Bearbeitung beendet werden. Es kann entsprechend nach einer weiteren Ausgestaltung vorgesehen sein, dass der Endzeitpunkt als der Zeitpunkt ermittelt wird, an dem sich die erste mathematische Ableitung des aufgenommenen zeitlichen Verlaufs um mehr als einen vorgegebenen Grenzwert ändert. Die mathematische Ableitung des Verlaufs ändert sich gerade beim Übergang zwischen den beiden beschriebenen Betriebszuständen. Der dabei vorgegebene Grenzwert kann selbstverständlich auch Null sein. Er wird aber meist einen von Null verschiedenen Wert annehmen. So ändert sich die mathematische Ableitung auch schon vor dem Übergang zwischen den beiden Betriebszuständen geringfügig im Rahmen einer normalen Mess- und/oder Bearbeitungsfluktuation. Um eine solche geringfügige Änderung unberücksichtigt zu lassen, wird der Grenzwert vorgegeben. Durch geeignete Wahl des Grenzwerts kann beispielsweise der Zeitpunkt, zu dem sich die Abtragsrate signifikant zu verringern beginnt, bereits als Bezugspunkt für ein Ende der Bearbeitung herangezogen werden. Es ist aber auch denkbar, die Bearbeitung für eine gewisse Zeit über das Erreichen des Bezugspunktes hinaus fortzusetzen, um die Werkstücke mit einer geringeren Dicke auszubilden. Auf diese Weise werden die Ebenheit der Werkstückoberflächen optimiert. Entsprechend kann der Endzeitpunkt als ein Zeitpunkt ermittelt werden, der um eine bestimmte Zeitdauer nach dem Zeitpunkt folgt, an dem sich die erste Ableitung des aufgenommenen zeitlichen Verlaufs um mehr als den vorgegebenen Grenzwert ändert. Die Dauer der Prozessfortführung nach der signifikanten Änderung der ersten Ableitung entscheidet über die Dicke der Werkstücke nach der Bearbeitung.

Die Arbeitsflächen der Arbeitsscheiben weisen üblicherweise einen Arbeitsbelag auf, z.B. einen Polierbelag (ein Poliertuch oder Pad) oder Ähnliches. Die Dicke der Arbeitsbeläge ist bei der Bestimmung der Werkstückdicke entsprechend zu berücksichtigen, z.B. indem diese von dem aus den gemessenen Abstandswerten berechneten Abstandswert abgezogen wird. Allerdings ändert sich die Dicke der Arbeitsbeläge verschleißbedingt ständig. Da bei der vorgenannten Ausgestaltung die Bestimmung des Endzeitpunkts der Bearbeitung über die Dicke der die Werkstücke aufnehmenden Träger, beispielsweise der Läuferscheiben, erfolgt, ist diese Art der Prozesssteuerung unabhängig von der Dicke der verwendeten Arbeitsbeläge auf den Arbeitsscheiben und insofern auch unempfindlich gegenüber einer Abnahme der Arbeitsbelagdicke aufgrund von Verschleiß. Aufwendige Kalibrierverfahren, um einen solchen Verschleiß zu berücksichtigen, wie sie beim Stand der Technik vorgesehen werden, sind daher nicht erforderlich. Aus der Reihe der einzelnen Messwerte des Abstandsmesssystems kann der jeweilige Endpunkt durch numerische Verfahren bestimmt werden.

Gemäß einer weiteren Ausgestaltung kann vorgesehen sein, dass die Abstandsmessung an den Messorten erfolgt, indem der Abstand an dem jeweiligen Messort während einer oder mehreren Umdrehungen der mindestens einen drehend angetriebenen Arbeitsscheibe mehrfach gemessen wird und aus dem Messverlauf eine Kenngröße ermittelt wird und diese Kenngröße mit einer Referenzkenngröße verglichen wird. Die Messung der Abstände kann dabei natürlich auch kontinuierlich erfolgen. Die Kenngröße kann beispielsweise der Mittelwert des Verlaufs der gemessenen Abstandswerte sein. Beim Stand der Technik wird davon ausgegangen, dass eine Schwankung eines Messsignals eines in eine der Arbeitsscheiben integrierten Abstandssensors, beispielsweise eines Wirbelstromsensors, währen der Drehung der Arbeitsscheiben durch mechanische Ungenauigkeiten der Scheiben bewirkt ist. Auf dieser Grundlage schlägt der Stand der Technik vor, nur bei einer bestimmten Stellung der Arbeitsscheiben kurzzeitig und periodisch den Abstand zu messen. Untersuchungen der Anmelderin haben aber überraschenderweise gezeigt, dass die Schwankungen im Sensorsignal nicht mit mechanischen Ungenauigkeiten allein erklärbar sind. Vielmehr betragen die Signalschwankungen ein Vielfaches dessen, was mit anderen Messmethoden durch mechanische Änderungen des Arbeitsspalts erklärbar ist. Die Erklärung ist vielmehr darin zu sehen, dass ein Wirbelstromsensor stets elektromagnetische Eigenschaften des Materials erfasst, welches er misst. Das Sensorsignal eines solchen Sensors wird also einerseits durch den Abstand und andererseits durch elektromagnetische Eigenschaften der Arbeitsscheibe beeinflusst, die beispielsweise durch Herstellungstoleranzen geringfügig fluktuieren. Wird entsprechend eine Arbeitsscheibe unter einem solchen Wirbelstromsensor gedreht, misst der Sensor auf der dabei erfassten Kreisbahn einen Signalverlauf, der charakteristisch für jede Scheibe ist und als sogenannter "magnetischer Fingerabdruck" bezeichnet werden kann. Dieser magnetische Fingerabdruck überlagert das Messsignal. Diese Problematik wird beim Stand der Technik nicht gelöst. Insbesondere sind Fluktuationen durch den magnetischen Fingerabdruck derart hochfrequent, dass sie im Bereich weniger Millimeter zu signifikanten Amplitudenänderungen des Messsignals führen können. Eine Messung in bestimmten Winkelstellungen der Arbeitsscheibe, wie im Stand der Technik vorgeschlagen, kann solche Genauigkeiten nicht liefern. Die Erfindung schlägt nach dieser Ausgestaltung daher vor, beispielsweise während einer Kalibrierung der Doppelseitenbearbeitungsmaschine für eine oder mehrere Arbeitsscheibenumdrehungen den magnetischen Fingerabdruck aufzunehmen und daraus eine Kenngröße, beispielsweise den Mittelwert, als Referenzkenngröße zu berechnen. Während eines anschließenden Bearbeitungsvorganges wird ebenfalls für jeweils eine oder mehrere Scheibenumdrehungen ein Abstandsmesssignal aufgenommen und daraus wiederum eine Kenngröße, beispielsweise der Mittelwert berechnet. Aus der Differenz der aktuellen Kenngröße und der Referenzkenngröße kann dann der gesuchte Abstandswert ermittelt werden. Da die Messung damit über die Dauer (einer oder mehrerer Scheibenumdrehungen) und nicht mehr über den Ort (Lage der Scheiben zueinander) bestimmt ist, kann sie durch den bei solchen Maschinen ohnehin vorhandenen Drehzahlgeber in Verbindung mit einer Zeitmessung gesteuert werden. Zusätzliche Winkelgeber sind nicht erforderlich. Die Vorteile dieser Ausgestaltung werden grundsätzlich selbstverständlich auch bei einer Abstandsmessung an nur einem radialen Ort des Arbeitsspalts verwirklicht. Bei den erfindungsgemäß zwei radial beabstandeten Messorten wird jedoch eine weitere Verbesserung der Messgenauigkeit erreicht.

Nach einer weiteren besonders praxisgemäßen Ausgestaltung kann der mindestens eine Träger mindestens eine Läuferscheibe sein, die mindestens eine Ausnehmung aufweist, in der das mindestens eine zu bearbeitende Werkstück aufgenommen wird, und die mittels einer Abwälzvorrichtung, beispielsweise einer Zahnkranzanordnung, in Rotation versetzt wird, wodurch das mindestens eine in der Läuferscheibe aufgenommene Werkstück sich entlang einer zykloidischen Bahn in dem Arbeitsspalt bewegt. Mit solchen an sich bekannten Läuferscheiben ist eine besonders präzise Werkstückbearbeitung möglich.

In einer weiteren besonders praxisgemäßen Ausgestaltung kann der Abstand zwischen den Arbeitsscheiben mit mindestens zwei an radial beabstandeten Messorten des Arbeitsspalts in einer der Arbeitsscheiben angeordneten Wirbelstromsensoren gemessen werden. Derartige Sensoren stellen zuverlässige Abstandsmessungen bereit und sind in Doppelseitenbearbeitungsmaschinen oftmals bereits zu anderen Zwecken, insbesondere der Regelung eines planparallelen Spalts, ohnehin vorgesehen.

Ein Ausführungsbeispiel der Erfindung wird nachfolgend anhand von Figuren näher erläutert. Es zeigen schematisch:

Fig. 1    einen Ausschnitt einer Doppelseitenbearbeitungsmaschine zur Durchführung des erfindungsgemäßen Verfahrens in einer vertikalen Schnittansicht,

Fig. 2    einen vergrößerten Ausschnitt der Doppelseitenbearbeitungsmaschine aus Fig. 1,

Fig. 3    den Ausschnitt aus Fig. 2 in einer weiteren Darstellung,

Fig. 4    ein Diagramm mit einer die radiale Aufenthaltswahrscheinlichkeit eines Werkstücks in dem Arbeitsspalt repräsentierenden Größe, und

Fig. 5    ein Diagramm mit einem zeitlichen Verlauf eines die Werkstückdicke während der Bearbeitung repräsentierenden Arbeitsscheibenabstands.

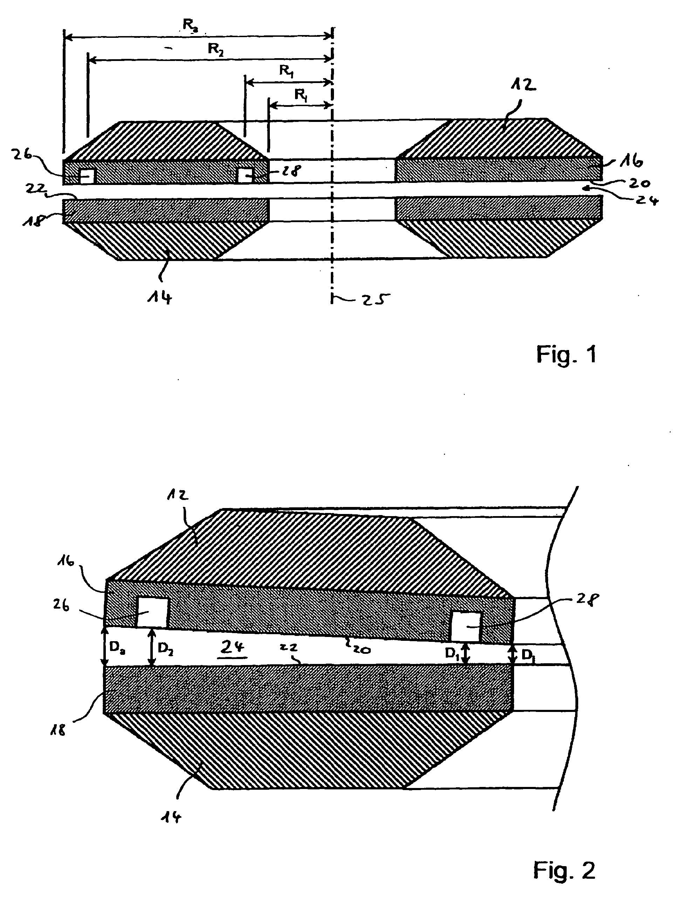

Soweit nichts anderes angegeben ist, bezeichnen in den Figuren gleiche Bezugzeichen gleiche Gegenstände. In Fig. 1 ist ein Teil einer Doppelseitenbearbeitungsmaschine, in dem Beispiel einer Doppelseitenpoliermaschine, gezeigt. Die Maschine weist eine ringförmige obere Trägerscheibe 12, sowie eine der oberen Trägerscheibe 12 gegenüberliegend angeordnete, ebenfalls ringförmige untere Trägerscheibe 14 auf. An der oberen und unteren Trägerscheibe 12, 14 ist eine ringförmige obere Arbeitsschreibe 16 und eine ringförmige untere Arbeitsscheibe 18 gehalten. Die Arbeitsscheiben 16, 18 weisen jeweils eine ringförmige Arbeitsfläche 20, 22 auf, die zwischen sich einen ebenfalls ringförmigen Arbeitsspalt 24 begrenzen. Mindestens eine der Trägerscheiben 12, 14 ist dabei in nicht näher dargestellter Weise mit einem Antrieb verbunden, mit dem die Trägerscheibe 12, 14 und damit die ihr zugeordnete Arbeitsscheibe 16, 18 um die in Fig. 1 bei 25 gezeigte Drehachse drehend angetrieben werden können. Insbesondere können die Träger- und damit die Arbeitsscheiben gegenläufig rotieren. In dem Arbeitsspalt 24 sind in dem vorliegenden Beispiel mehrere nicht gezeigte, jedoch an sich bekannte Läuferscheiben angeordnet, die über eine Zahnkranzanordnung bei einer Drehung der Arbeitsscheiben ebenfalls in Rotation versetzt werden. Sie besitzen jeweils Ausnehmungen für in dem Arbeitsspalt 24 zu bearbeitende Werkstücke, beispielsweise Wafer. Durch die Rotation der Läuferscheiben werden die darin aufgenommenen Wafer entlang zykloidischer Bahnen in dem Arbeitsspalt 24 bewegt. Für die Bearbeitung werden die relativ zueinander rotierenden Arbeitsscheiben 16, 18 mit einer Anpresskraft gegeneinander gedrückt und die schwimmend in den Läuferscheiben gehaltenen Werkstücke doppelseitig zwischen den Arbeitsscheiben 16, 18 bearbeitet, beispielsweise poliert. Die Arbeitsflächen 20, 22 der Arbeitsscheiben 16, 18 können dazu mit geeigneten Arbeitsbelägen, beispielsweise Polierbelägen versehen sein.

In der oberen Arbeitsscheibe 16 sind an zwei radial zueinander beabstandeten Orten zwei Abstandssensoren 26, 28, vorliegend Wirbelstromsensoren 26, 28, angeordnet, die den Abstand zwischen der oberen Arbeitsscheibe 16 und der unteren Arbeitsscheibe 18, insbesondere den Abstand zwischen den Arbeitsflächen 20, 22, messen. In Fig. 1 weiterhin zu erkennen sind verschiedene Radien, so der Radius $R_i$ des inneren Rands des Arbeitsspalts 24, der Radius $R_a$ des äußeren Rands des Arbeitsspalts 24 sowie die Radien $R_1$ und $R_2$, die die radialen Positionen der Wirbelstromsensoren 26, 28 anzeigen. Erfindungsgemäß kann beispielsweise aus den mit den Wirbelstromsensoren 26, 28 gemessenen Abständen zwischen den Arbeitsscheiben 16, 18 ein Abstand an einer beliebigen anderen radialen Position des Arbeitsspalts 24 berechnet werden, beispielsweise am inneren Rand des Arbeitsspalts mit dem Radius $R_i$ oder am äußeren Rand des Arbeitsspalts mit dem Radius $R_a$. Es kann aber auch beispielsweise der Abstand der Arbeitsscheiben 16, 18 zueinander an einem radialen Ort ermittelt werden, dessen Radius der Mittelwert aus den Radien $R_a$ und $R_i$ ist. Dieser Ort wird also in radialer Richtung zwischen den Radien $R_a$ und $R_i$ liegen. Aus den so berechneten Abständen kann dann beispielsweise auf die Werkstückdicke geschlossen werden. Insbesondere können die jeweils ermittelten Abstände direkt als Werkstückdicke angenommen werden, gegebenenfalls unter Substraktion einer Arbeitsbelagdicke.

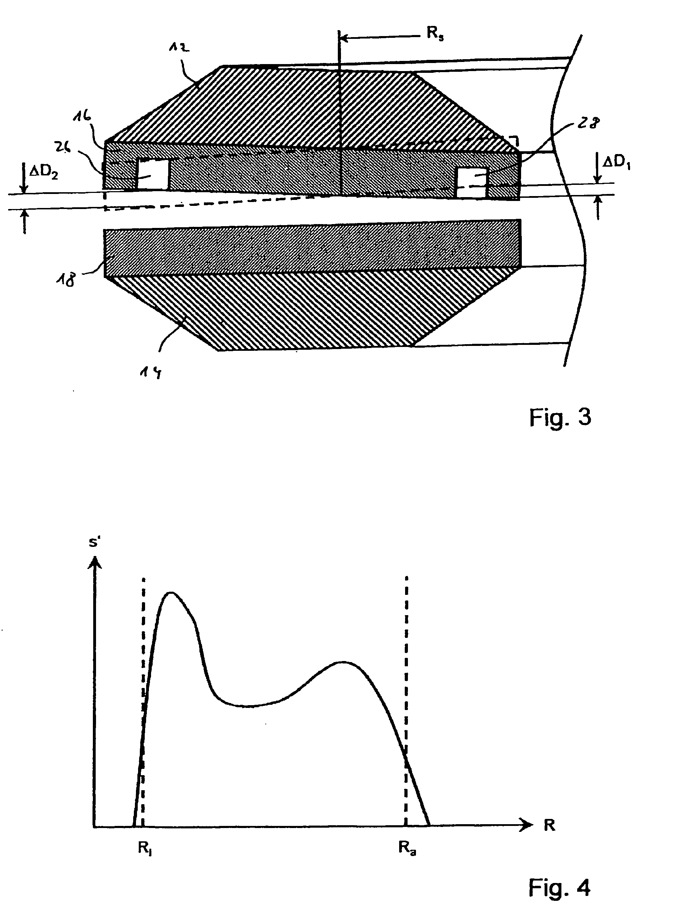

Die in den Figuren dargestellte Doppelseitenbearbeitungsmaschine ist mit einer Verstelleinrichtung versehen (nicht dargestellt), mit der die obere Trägerscheibe und mit ihr die obere Arbeitsscheiben 16 konkav oder konvex verstellt werden kann. In den Fig. 2 und 3 ist in einem vergrößerten Ausschnitt eine konvexe Verstellung der oberen Träger- und Arbeitsscheibe 12, 16 gezeigt. Dabei ist zu erkennen, dass sich der Abstand $D_i$ zwischen den Arbeitsscheiben 16, 18 am inneren Arbeitsspaltrand sowie der Abstand $D_a$ am äußeren Arbeitsspaltrand und damit auch die von den Wirbelstromsensoren 26, 28 gemessenen Abstände $D_1$ und $D_2$ entsprechend verändern. In Fig. 3 ist gestrichelt eine leicht konkave Stellung der beiden Arbeitsscheiben 16, 18 zueinander gezeigt. Zu erkennen ist, dass die beiden Wirbelstromsensoren 26, 28 zwischen der gestrichelt gezeigten konkaven Stellung und der in den Fig. 2 und 3 konvexen Einstellung unterschiedliche Abstandsänderungen $\Delta D_1$ und $\Delta D_2$ messen. Weiterhin ist zu erkennen, dass an einer radialen Position $R_s$ keine Änderung des Abstands bei einer Verstellung des Arbeitsspalts eintritt. An diesem Schwenk- oder Drehpunkt der oberen Arbeitsscheibe 16 erfolgt bei einer Veränderung der Spaltgeometrie also keine Änderung der Arbeitsspaltbreite. Dies kann ausgenutzt werden, indem aus den Messsignalen der Wirbelstromsensoren 26, 28 gerade der Abstand zwischen den Arbeitsscheiben 16, 18 an der (beispielsweise zuvor im Rahmen einer Kalibrierung ermittelten) radialen Position $R_s$ berechnet wird und dieser Abstand als Dicke der in dem Werkstück in dem Arbeitsspalt 24 bearbeiteten Werkstücke angenommen wird.

In Fig. 4 ist eine die radiale Aufenthaltswahrscheinlichkeit der Werkstücke in dem Arbeitsspalt 24 während ihrer Bearbeitung repräsentierende Größe s' gezeigt, vorliegend die bezogene Bahnlängenverteilung. Die Größe s' ist über dem Radius R gezeigt. Gestrichelt gezeichnet sind die den Arbeitsspalt 24 begrenzenden inneren und äußeren Radien $R_i$ und $R_a$. Es ist zu erkennen, dass sich die Werkstücke vermehrt im Bereich des inneren Radius aufhalten. Diese Erkenntnis kann genutzt werden, um an einer Mehrzahl von beispielsweise gleichmäßig verteilten radialen Positionen aus den Messsignalen der Wirbelstromsensoren 26, 28 den Abstand zwischen den Arbeitsscheiben zu berechnen, die jeweiligen Abstände mit der in Fig. 4 aufgetragenen, die radiale Aufenthaltswahrscheinlichkeit angebenden Größe s' zu wichten und aus diesen gewichteten Abständen das arithmetische Mittel als tatsächliche Werkstückdicke zu bilden.

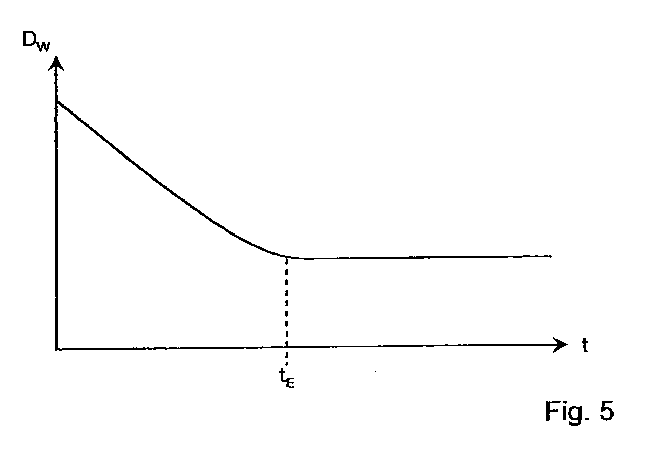

Fig. 5 zeigt einen zeitlichen Verlauf eines erfindungsgemäß bestimmten Arbeitsscheibenabstands an einem radialen Ort des Arbeitsspalts, der die Werkstückdicke während der Bearbeitung repräsentiert. Insbesondere ist der an einem geeigneten radialen Ort ermittelte Arbeitsscheibenabstand $D_w$ über der Zeit t aufgetragen und die zu verschiedenen Zeitpunkten aufgenommenen Messpunkte sind zu der in Fig. 5 dargestellten Kurve verbunden worden. Es ist zu erkennen, dass im Wesentlichen zwei stabile Betriebszustände vorliegen. Vor dem Zeitpunkt $t_E$ findet ein weitgehend konstanter Materialabtrag statt. Es ergibt sich eine Gerade mit einer konstanten negativen Steigung. Um den Zeitpunkt $t_E$ herum erreichen die in dem Arbeitsspalt 24 bearbeiteten Werkstücke die Dicke der sie schwimmend aufnehmenden Läuferscheiben. Entsprechend kommt der Materialabtrag zu einem weitgehenden Ende und der Arbeitsscheibenabstand und also die Werkstückdicke bleiben nach dem Zeitpunkt $t_E$ im Wesentlichen auf einem konstanten Wert, also einer Geraden mit Steigung Null. Der Zeitpunkt $t_E$ kann somit als Endzeitpunkt für die Bearbeitung gewählt werden. Er kann in einfacher Weise ermittelt werden, indem die erste mathematische Ableitung der in Fig. 5 gezeigten Kurve berechnet wird. Sobald sich diese, gegebenenfalls oberhalb eines Messfluktuationen ausblendenden Grenzwerts, signifikant ändert, ist der Zeitpunkt $t_E$ erreicht und die Bearbeitung kann beendet werden. Um die Ebenheit der Werkstücke und insbesondere ihrer Oberflächen optimieren, kann der Bearbeitungsprozess auch gezielt über den Zeitpunkt $t_E$ für eine bestimmte Zeitdauer hinaus fortgesetzt werden. Dies führt allerdings zu einem erhöhten Verschleiß der Läuferscheiben.

Mit dem erfindungsgemäßen Verfahren ist in einfacher Weise eine präzise Bearbeitung der Werkstücke auf eine vorbestimmte Dicke möglich.

## Patentansprüche

1. Verfahren zum Bearbeiten von flachen Werkstücken in einer Doppelseitenbearbeitungsmaschine, die eine obere und eine untere Arbeitsscheibe (16, 18) aufweist, wobei mindestens eine der Arbeitsscheiben (16, 18) rotierend angetrieben ist und die Arbeitsscheiben (16, 18) jeweils eine ringförmige Arbeitsfläche (20, 22) besitzen, wobei die Arbeitsflächen (20, 22) zwischen sich einen ebenfalls ringförmigen Arbeitsspalt (24) begrenzen, in dem sich mindestens ein Träger befindet, der mindestens ein Werkstück in dem Arbeitsspalt (24) führt, so dass das mindestens eine Werkstück zwischen den Arbeitsflächen (20, 22) doppelseitig bearbeitet wird, wobei an mindestens zwei radial beabstandeten Messorten des Arbeitsspalts (24) der Abstand zwischen den Arbeitsscheiben (16, 18) gemessen wird, **dadurch gekennzeichnet, dass** aus den gemessenen Abständen ein Abstand zwischen den Arbeitsscheiben (16, 18) an einem die Dicke des in dem Arbeitsspalt (24) bearbeiteten mindestens einen Werkstücks repräsentierenden Ort des Arbeitsspalts (24), insbesondere einem von den Messorten wiederum radial beabstandeten Ort, ermittelt wird und aus dem so ermittelten Abstand auf die Dicke des in dem Arbeitsspalt (24) bearbeiteten mindestens einen Werkstücks geschlossen wird.

2. Verfahren nach Anspruch 1, **dadurch gekennzeichnet, dass** aus den gemessenen Abständen der Abstand zwischen den Arbeitsscheiben (16, 18) an einem Ort am inneren und/oder äußeren Rand des Arbeitsspalts (24) ermittelt wird und aus dem so ermittelten Abstandswert auf die Dicke des in dem Arbeitsspalt (24) bearbeiteten mindestens einen Werkstücks geschlossen wird.

3. Verfahren nach Anspruch 1, **dadurch gekennzeichnet, dass** aus den gemessenen Abständen der Abstand zwischen den Arbeitsscheiben (16, 18) an einem Ort ermittelt wird, dessen Radius dem Mittelwert aus dem Radius des inneren Rands des Arbeitsspalts (24) und des äußeren Rands des Arbeitsspalts (24) entspricht, und aus dem so ermittelten Abstand auf die Dicke des in dem Arbeitsspalt (24) bearbeiteten mindestens einen Werkstücks geschlossen wird.

4. Verfahren nach Anspruch 1, **dadurch gekennzeichnet, dass** die Arbeitsfläche (20, 22) zumindest einer der Arbeitsscheiben (16, 18) in eine konvexe oder eine konkave Form verstellt werden kann und aus den gemessenen Abständen der Abstand zwischen den Arbeitsscheiben (16, 18) an einem Ort ermittelt wird, an dem sich der Abstand zwischen den Arbeitsscheiben (16, 18) bei einer Verstellung der mindestens einen Arbeitsscheibe (16, 18) in eine konvexe oder eine konkave Form nicht ändert, und aus dem so ermittelten Abstand auf die Dicke des in dem Arbeitsspalt (24) bearbeiteten mindestens einen Werkstücks geschlossen wird.

5. Verfahren nach Anspruch 4, **dadurch gekennzeichnet, dass** der Ort, an dem sich der Abstand zwischen den Arbeitsscheiben (16, 18) bei einer Verstellung der mindestens einen Arbeitsscheibe (16, 18) in eine konvexe oder eine konkave Form nicht ändert, ermittelt wird, indem die mindestens eine Arbeitsscheibe (16, 18) in eine konkave und/oder eine konvexe Form verstellt wird, dabei eine Änderung des Abstands der Arbeitsscheiben (16, 18) an den Messorten gemessen wird und daraus der Radius des Orts bestimmt wird, an dem sich der Abstand zwischen den Arbeitsscheiben (16, 18) bei einer Verstellung der mindestens einen Arbeitsscheibe (16, 18) nicht ändert.

6. Verfahren nach Anspruch 1, **dadurch gekennzeichnet, dass** aus den gemessenen Abständen ein Abstand zwischen den Arbeitsscheiben (16, 18) an einer Mehrzahl von zu den Messorten radial beabstandeten Orten ermittelt wird, die so ermittelten Abstände mit einer die radiale Aufenthaltswahrscheinlichkeit der Werkstücke an den den ermittelten Abständen zugeordneten Orten im Zuge ihrer Bearbeitung in dem Arbeitsspalt (24) repräsentierenden Größe gewichtet werden und auf die Werkstückdicke aus dem Mittelwert der gewichteten Abstände geschlossen wird.

7. Verfahren nach einem der vorhergehenden Ansprüche, **dadurch gekennzeichnet, dass** es wiederholt durchgeführt wird, ein zeitlicher Verlauf der Werkstückdicke aufgenommen wird und aus dem zeitlichen Verlauf der Werkstückdicke ein Endzeitpunkt für die Werkstückbearbeitung ermittelt wird.

8. Verfahren nach Anspruch 7, **dadurch gekennzeichnet, dass** der Endzeitpunkt als der Zeitpunkt ermittelt wird, an dem sich die erste mathematische Ableitung des aufgenommenen zeitlichen Verlaufs um mehr als einen vorgegebenen Grenzwert ändert.

9. Verfahren nach Anspruch 7, **dadurch gekennzeichnet, dass** der Endzeitpunkt als ein Zeitpunkt ermittelt wird, der um eine bestimmte Zeitdauer nach dem Zeitpunkt folgt, an dem sich die erste Ableitung des aufgenommenen zeitlichen Verlaufs um mehr als einen vorgegebenen Grenzwert ändert.

10. Verfahren nach einem der vorhergehenden Ansprüche, **dadurch gekennzeichnet, dass** die Abstandsmessung an den Messorten erfolgt, indem der Abstand an dem jeweiligen Messort während einer oder mehreren Umdrehungen der mindestens einen drehend angetriebenen Arbeitsscheibe (16, 18) mehrfach gemessen wird und aus dem Messverlauf eine Kenngröße ermittelt wird und diese ermittelte Kenngröße mit einer Referenzkenngröße verglichen wird.

11. Verfahren nach Anspruch 10, **dadurch gekennzeichnet, dass** die Kenngröße der Mittelwert des Verlaufs der gemessenen Abstandswerte ist.

12. Verfahren nach einem der vorhergehenden Ansprüche, **dadurch gekennzeichnet, dass** der mindestens eine Träger mindestens eine Läuferscheibe ist, die mindestens eine Ausnehmung aufweist, in der das mindestens eine zu bearbeitende Werkstück aufgenommen wird, und die mittels einer Abwälzvorrichtung in Rotation versetzt wird, wodurch das mindestens eine in der Läuferscheibe aufgenommene Werkstück sich entlang einer zykloidischen Bahn in dem Arbeitsspalt bewegt.

13. Verfahren nach einem der vorhergehenden Ansprüche, **dadurch gekennzeichnet, dass** der Abstand zwischen den Arbeitsscheiben (16, 18) mit mindestens zwei an radial beabstandeten Messorten des Arbeitsspalts (24) in einer der Arbeitsscheiben (16, 18) angeordneten Wirbelstromsensoren (26, 28) gemessen wird.

## Claims

1. A method for machining flat workpieces in a double disk machining tool, which has an upper and a lower work disk (16, 18), wherein at least one of the work disks (16, 18) is rotatingly driven and the work disks (16, 18) each have an annular work surface (20, 22), wherein the work surfaces (20, 22) delimit an also annular work gap (24) between themselves, in which at least one carrier is located, which guides at least one workpiece in the work gap (24) so that the at least one workpiece is machined in a double-sided manner between the work surfaces (20, 22), wherein the distance between the work disks (16, 18) is measured at at least two radially spaced measurement locations of the work gap (24), **characterized in that** from the measured distances, a distance between the work disks (16, 18) is determined at a location of the work gap (24) representing the thickness of the at least one workpiece machined in the work gap (24), in particular a location in turn radially spaced from the measurement locations, and the thickness of the at least one workpiece machined in the work gap (24) is determined from the distance determined in this manner.

2. The method according to claim 1, **characterized in that** from the measured distances the distance between the work disks (16, 18) at a location on the inner and/or outer edge of the work gap (24) is determined and the thickness of the at least one workpiece machined in the work gap (24) is determined from the thus determined distance value.

3. The method according to claim 1, **characterized in that** from the measured distances the distance between the work disks (16, 18) is determined at a location, whose radius corresponds to the average value of the radius of the inner edge of the work gap (24) and the outer edge of the work gap (24), and the thickness of the at least one workpiece machined in the work gap (24) is determined from the thus determined distance.

4. The method according to claim 1, **characterized in that** the work surface (20, 22) of at least one of the work disks (16, 18) can be adjusted into a convex or a concave shape and, from the measured distances, the distance between the work disks (16, 18) is determined at a location where the distance between the work disks (16, 18) does not change during an adjustment of the at least one work disk (16, 18) into a convex or a concave shape and the thickness of the at least one workpiece machined in the work gap (24) is determined from the thus determined distance.

5. The method according to claim 4, **characterized in that** the location where the distance between the work disks (16, 18) does not change during an adjustment of the at least one work disk (16, 18) into a concave or a convex shape is determined **in that** the at least one work disk (16, 18) is adjusted into a concave and/or a convex shape, a change in the distance of the work disks (16, 18) at the measurement locations is measured and from this the radius of the location is determined at which the distance between the work disks (16, 18) does not change during an adjustment of the at least one work disk (16, 18).

6. The method according to claim 1, **characterized in that** from the measured distances a distance between the work disks (16, 18) is determined at a plurality of locations radially spaced from the measurement locations, the thus determined distances are weighted with a variable representing the radial probability of presence of the workpieces at the locations assigned to the determined distances in the course of their machining in the work gap (24), and the workpiece thickness is determined from the average value of the weighted distances.

7. The method according to one of the previous claims, **characterized in that** it is performed repeatedly, a temporal characteristic of the workpiece thickness is recorded and an end time point for the workpiece machining is determined from the temporal characteristic of the workpiece thickness.

8. The method according to claim 7, **characterized in that** the end time point is determined as the time point when the first mathematical derivation of the recorded temporal characteristic changes by more than a predetermined threshold value.

9. The method according to claim 7, **characterized in that** the end time point is determined as a time point, which occurs a certain period of time after the time point when the first derivation of the recorded temporal characteristic changes by more than a predetermined threshold value.

10. The method according to one of the previous claims, **characterized in that** the distance measurement takes place at the measurement locations by multiple measurement of the distance at the respective measurement location during one or more revolutions of the at least one rotatingly driven work disk (16, 18) and a parameter is determined from the measurement characteristic and this determined parameter is compared with a reference parameter.

11. The method according to claim 10, **characterized in that** the parameter is the average value of the characteristic of the measured distance values.

12. The method according to one of the previous claims, **characterized in that** the at least one carrier is at least one rotor disk, which has at least one recess, in which the at least one workpiece to be machined is received, and which is rotated by means of a roller device, whereby the at least one workpiece received in the rotor disk moves along a cycloid path in the work gap.

13. The method according to one of the previous claims, **characterized in that** the distance between the work disks (16, 18) is measured with at least two eddy current sensors (26, 28) arranged at radially spaced measurement locations of the work gap (24) in one of the work disks (16, 18).

**Revendications**

1. Procédé d'usinage de pièces plates dans une machine d'usinage bilatéral qui présente une meule de travail supérieure et une meule de travail inférieure (16, 18), au moins une des meules de travail (16, 18) étant entraînée en rotation et les meules de travail (16, 18) possédant respectivement une face de travail (20, 22) annulaire, les faces de travail (20, 22) limitant entre elles un interstice de travail (24) également annulaire dans lequel se trouve au moins un élément porteur qui guide au moins une pièce dans l'interstice de travail (24) de telle sorte que la pièce au moins au nombre de un est usinée sur les deux côtés entre les faces de travail (20, 22),
la distance entre les meules de travail (16, 18) étant mesurée dans au moins deux emplacements de mesure de l'interstice de travail (24) qui sont espacés radialement, **caractérisé en ce que**, à partir des distances mesurées, il est déterminé une distance entre les meules de travail (16, 18) dans un emplacement de l'interstice de travail (24) représentant l'épaisseur de la pièce au moins au nombre de un usinée dans l'interstice de travail (24), en particulier dans un emplacement de nouveau espacé radialement des emplacements de mesure, et **en ce que** l'épaisseur de la pièce au moins au nombre de un usinée dans l'interstice de travail (24) est déduite à partir de la distance ainsi déterminée.

2. Procédé selon la revendication 1, **caractérisé en ce que**, à partir des distances mesurées, la distance entre les meules de travail (16, 18) est déterminée dans un emplacement sur le bord intérieur et/ou extérieur de l'interstice de travail (24), et **en ce que**, l'épaisseur de la pièce au moins au nombre de un usinée dans l'interstice de travail (24) est déduite à partir de la valeur de distance ainsi déterminée.

3. Procédé selon la revendication 1, **caractérisé en ce que**, à partir des distances mesurées, la distance entre les meules de travail (16, 18) est déterminée dans un emplacement dont le rayon correspond à la valeur moyenne formée à partir du rayon du bord intérieur de l'interstice de travail (24) et du bord extérieur de l'interstice de travail (24), et **en ce que** l'épaisseur de la pièce au moins au nombre de un usinée dans l'interstice de travail (24) est déduite à partir de la distance ainsi déterminée.

4. Procédé selon la revendication 1, **caractérisé en ce que** la face de travail (20, 22) d'au moins une des meules de travail (16, 18) peut être déplacée dans une forme convexe ou concave et **en ce que**, à partir des distances mesurées, la distance entre les meules de travail (16, 18) est déterminée dans un emplacement dans lequel la distance entre les meules de travail (16, 18) ne varie pas lors d'un déplacement de la meule de travail (16, 18) au moins au nombre de un dans une forme convexe ou concave, et **en ce que** l'épaisseur de la pièce au moins au nombre de un usinée dans l'interstice de travail (24) est déduite à partir de la distance ainsi déterminée.

**5.** Procédé selon la revendication 4, **caractérisé en ce que** l'emplacement dans lequel la distance entre les meules de travail (16, 18) ne varie pas lors d'un déplacement de la meule de travail (16, 18) au moins au nombre de un dans une forme convexe ou concave est déterminé par le fait que la meule de travail (16, 18) au moins au nombre de un est déplacée dans une forme concave et/ou convexe, et une variation de la distance des meules de travail (16, 18) est mesurée dans les emplacements de mesure, et à partir de là le rayon de l'emplacement dans lequel la distance entre les meules de travail (16, 18) ne varie pas lors d'un déplacement de la meule de travail (16, 18) est défini.

**6.** Procédé selon la revendication 1, **caractérisé en ce que**, à partir des distances mesurées, une distance entre les meules de travail (16, 18) est déterminée dans une pluralité d'emplacements espacés radialement des emplacements de mesure, **en ce que** les distances ainsi déterminées sont pondérées avec une grandeur représentant la probabilité de séjour radial des pièces dans les emplacements affectés aux distances déterminées lors de leur usinage dans l'interstice de travail (24), et **en ce que** l'épaisseur de pièce est déduite à partir de la valeur moyenne des distances pondérées.

**7.** Procédé selon une des revendications précédentes, **caractérisé en ce qu'**il est exécuté de façon répétée, **en ce qu'**une allure dans le temps de l'épaisseur de pièce est enregistrée et **en ce que**, à partir de l'allure dans le temps de l'épaisseur de pièce, un instant final de l'usinage de pièce est déterminé.

**8.** Procédé selon la revendication 7, **caractérisé en ce que** l'instant final est déterminé en tant qu'instant où la première dérivée mathématique de l'allure dans le temps enregistrée varie de plus d'une valeur limite prédéfinie.

**9.** Procédé selon la revendication 7, **caractérisé en ce que** l'instant final est déterminé en tant qu'instant qui suit d'une durée définie l'instant où la première dérivée de l'allure dans le temps enregistrée varie de plus d'une valeur limite prédéfinie.

**10.** Procédé selon une des revendications précédentes, **caractérisé en ce que** la mesure de distance s'effectue dans les emplacements de mesure par le fait que la distance est mesurée plusieurs fois dans l'emplacement de mesure respectif pendant une ou plusieurs rotations de la meule de travail (16, 18) au moins au nombre de un entraînée en rotation, et **en ce qu'**une grandeur caractéristique est déterminée à partir de l'allure de mesure, et cette grandeur caractéristique déterminée est comparée à une grandeur caractéristique de référence.

**11.** Procédé selon la revendication 10, **caractérisé en ce que** la grandeur caractéristique est la valeur moyenne de l'allure des valeurs de distance mesurées.

**12.** Procédé selon une des revendications précédentes, **caractérisé en ce que** l'élément porteur au moins au nombre de un est au moins un disque de rotor qui présente au moins un creux dans lequel est reçue la pièce à usiner au moins au nombre de un, et qui est mis en rotation au moyen d'un dispositif de roulement, ce qui fait que la pièce au moins au nombre de un reçue dans le disque de rotor se déplace le long d'une trajectoire cycloïdale dans l'interstice de travail.

**13.** Procédé selon une des revendications précédentes, **caractérisé en ce que** la distance entre les meules de travail (16, 18) est mesurée avec au moins deux capteurs à courant de Foucault (26, 28) disposés dans des emplacements de mesure, espacés radialement, de l'interstice de travail (24) dans une des meules de travail (16, 18).

Fig. 1

Fig. 2

Fig. 3

Fig. 4

Fig. 5

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4433510 A
- US 5969521 A
- US 7147541 A
- DE 102004040429 A1
- DE 102006037490 A1
- DE 102007056627 A1

**In der Beschreibung aufgeführte Nicht-Patentliteratur**

- **T. ARDELT.** *Einfluss der Relativbewegung auf den Prozess und das Arbeitsergebnis beim Planschleifen mit Planetenkinetik,* ISBN 3-8167-5609-3